# EUROPÄISCHE PATENTSCHRIFT

(11) **EP 0 505 532 B1**
(45) Veröffentlichungstag und Bekanntmachung des Hinweises auf die Patenterteilung: **28.02.1996**
(21) Anmeldenummer: 91916713.0
(22) Anmeldetag: 26.09.1991
(51) Int. Cl.: B60T 8/38, B60T 8/44, B60T 11/236, B60T 11/20

(54) **BLOCKIERGESCHÜTZTE BREMSANLAGE**
ANTILOCK BRAKING SYSTEM
SYSTEME DE FREINAGE A ANTIBLOQUEUR

(30) Priorität: 17.10.1990 DE 4032874; 14.12.1990 DE 4039988
(43) Veröffentlichungstag der Anmeldung: 30.09.1992
(73) Patentinhaber: ITT Automotive Europe GmbH, D-60488 Frankfurt (DE)
(72) Erfinder: WUPPER, Hans, D-6382 Friedrichsdorf (DE)
(86) Internationale Anmeldenummer: EP9101842
(87) Internationale Veröffentlichungsnummer: WO9206873

(56) Entgegenhaltungen:
- WO-A-89/08573
- DE-A- 3 726 798
- DE-C- 830 003
- DE-U- 8 701 642
- FR-A- 1 146 405
- FR-A- 2 593 129
- GB-A- 2 193 771
- US-A- 3 376 705
- BUSAK+LUYKEN DICHTUNGEN GmbH & Co STUTTGART, B.R.D.. Lieferprogram, Ausgabe 1988, Seiten 3-5, 9

## Beschreibung

Die Erfindung geht aus von einer blockiergeschützten Bremsanlage gemäß dem Oberbegriff des Anspruchs 1. Eine derartige Bremsanlage ist zum Beispiel aus der DE-OS 36 27 000 bekannt. Die Anlage zeichnet sich dadurch aus, daß die Pumpen, die während einer Regelung Druckmittel in die Bremskreise fördern, eine direkte Verbindung zu den Arbeitskammern des Hauptbremszylinders aufweisen. Die Arbeitskolben, die die Arbeitskammern begrenzen, sind mit sogenannten Zentralventilen ausgestattet, die als Druckregelventile arbeiten und zwar derart, daß der Pumpendruck fußkraftproportional eingestellt wird. Die Elemente der Zentralventile, d.h. der Ventilkörper und der Ventilsitz, müßten aus gehärtetem Material, zum Beispiel aus Metall bestehen, damit die während eines Regelspiels in ununterbrochener Reihenfolge ablaufende Öffnungs- und Schließvorgänge nicht zu einer Beschädigung des Ventils führen.

Weiterhin sind die Kolben mit Manschettendichtungen versehen, die ein Rückschlagventil aufweisen, damit bei einem schnellen Lösen der Bremse Druckmittel aus dem Vorratsbehälter über die Manschetten in die Bremskreise gelangen kann.

Aus dem Bereich der konventionellen Bremstechnik sind Hauptbremszylinder bekannt, die über sogenannte Ausgleichsbohrungen verfügen. Die Bohrungen münden unmittelbar vor einer Manschette in die Arbeitskammer des Hauptbremszylinders. Bei nicht betätigtem Hauptbremszylinder besteht somit eine Verbindung der Bremskreise über die Ausgleichsbohrung zum Vorratsbehälter. Wenn der Hauptbremszylinder betätigt wird, werden die Arbeitskolben verschoben und die Manschette schiebt sich über die Ausgleichsbohrung, so daß die Bremskreise hydraulisch gesperrt werden und ein Druckaufbau möglich ist. Derartige Hauptbremszylinder lassen sich nicht in blockiergeschützte Bremsanlagen der oben genannten Art einsetzen, da bei einer fußkraftproportionalen Regelung des Pumpendrucks die Manschetten unter hohem Druck über die Ausgleichsbohrungen fahren und dabei zerstört würden. Grundsätzlich könnte die Manschette zwar aus härterem Material hergestellt werden, so daß bei einer Regelung keine Beschädigung erfolgt, in diesem Fall könnte die Dichtung aber keine Rückschlagventilfunktion aufnehmen, wie dies eine Manschette aus weichem Material tut.

Aus diesem Grund wurden für blockiergeschützte Bremsanlagen Hauptzylinder mit Zentralventilen gemäß dem oben genannten Stand der Technik eingesetzt.

Es liegt auf der Hand, daß derartige Hauptbremszylinder mit Zentralventilen wesentlich aufwendiger herzustellen sind, als Hauptbremszylinder für konventionelle Bremsanlagen.

Die Erfindung beruht daher auf der Aufgabe, eine blockiergeschützte Bremsanlage derart zu konstruieren, daß ein einfach aufgebauter Hauptbremszylinder eingesetzt werden kann. Die Aufgabe wird mit den Mitteln gelöst, die im kennzeichnenden Teil des Anspruchs 1 genannt sind. Wesentlich ist, daß eine Dichtung aus gehärtetem Material eingesetzt wird und daß die Pumpe so gestaltet wird, daß beim schnellen Lösen der Bremse Druckmittel über den Pumpenweg nachfließen kann, ohne daß die Pumpe arbeitet.

Dazu müssen die Rückschlagventile, die als Saug- und Druckventile für Hubkolbenpumpen arbeiten mit äußerst geringem Öffungsdruck eingesetzt werden.

Die Dichtung am Arbeitskolben des Hauptbremszylinders kann entweder aus der Kombination eines elastischen Rings und eines Gleitrings bestehen, wobei der elastische Ring zum Beispiel aus Gummi und der Gleitring aus Teflon hergestellt ist, oder aus einem Gummiring mit hoher Shorehärte.

Eine weitere Aufgabe der Erfindung besteht darin, den Hauptzylinder, bzw. die Dichtung so weiter zubilden, daß die Anforderungen an die Oberflächenbeschaffenheit der Bohrung reduziert werden kann, Fehler in der Oberfläche nicht zu einem Kreisausfall führen und der Nachteil einer Gleitringdichtung, nämlich die Feinstleckage im Niederdruckbereich, kompensiert wird.

Diese Aufgabe wird mit den Mitteln gelöst, die im Anspruch 6 genannt sind.

Zur Erläuterung des Erfindungsgedankens sollen im folgenden zwei Ausführungsbeispiele dargestellt werden.

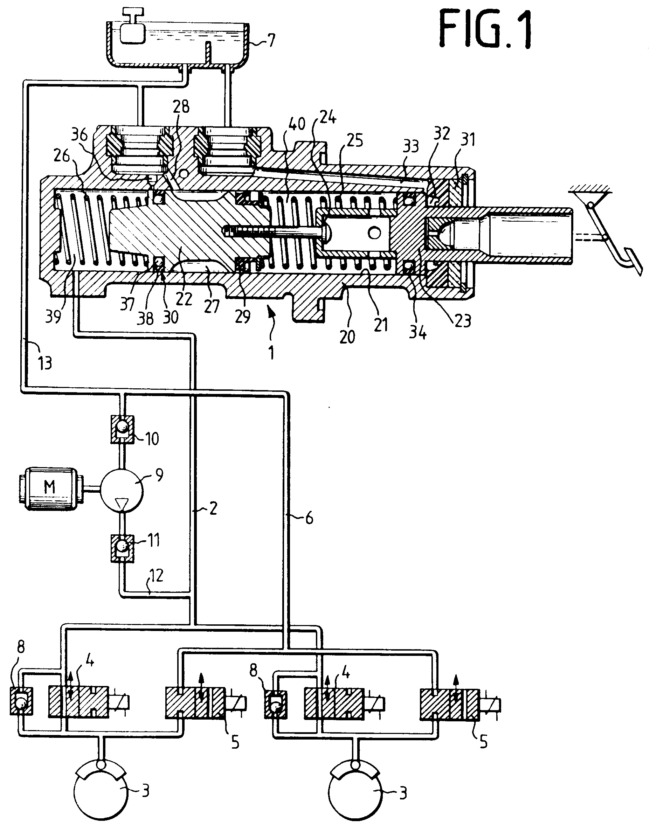

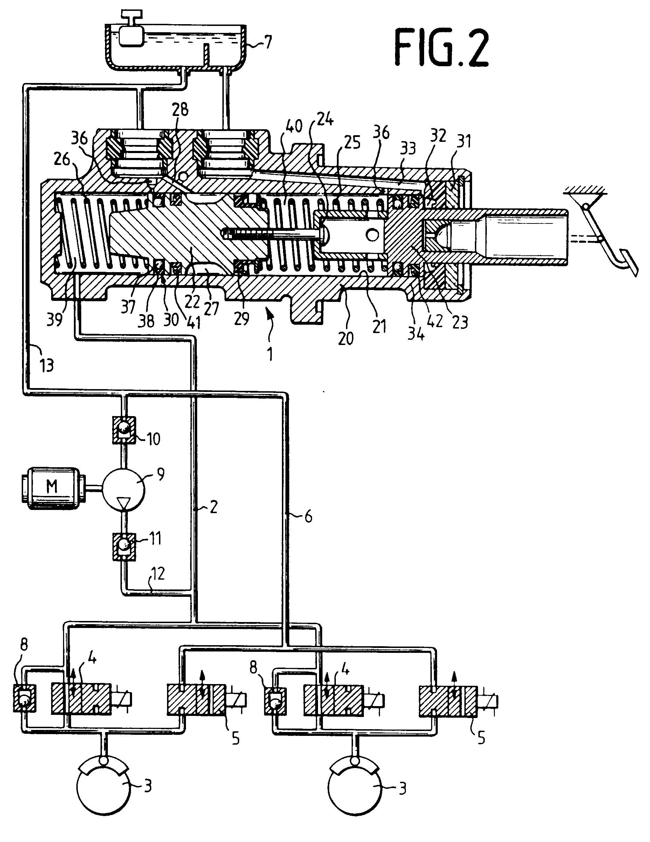

Die Anlage gemäß Figur 1 und Figur 2 besteht aus einem Hauptbremszylinder 1 an den über eine Bremsleitung 2 Radbremsen 3 angeschlossen sind. Ein Einlaßventil 4 ist in die Bremsleitung eingefügt. Die Radbremsen 3 stehen weiterhin über eine Rücklaufleitung 6 mit einem Vorratsbehälter 7 in Verbindung. In die Rücklaufleitung 6 eingefügt ist ein Auslaßventil 5. Ein- und Auslaßventil werden elektromagnetisch betätigt, wobei das Einlaßventil im stromlosen Zustand offen und das Auslaßventil im stromlosen Zustand geschlossen ist. Beim Stromdurchfluß durch die Erregerspulen schalten die Ventile um, so daß das Einlaßventil 4 die Bremsleitung 2 sperrt und das Auslaßventil 5 die Rücklaufleitung 6 freigibt.

Durch das Schalten der Ventile kann den Radbremsen Druckmittel entnommen und wieder zugeführt werden, so daß der Bremsdruck in der Radbremse steuerbar ist. Mit einem nicht dargestellten Sensor kann das Drehverhalten des Rades überwacht werden, wobei die Sensorsignale an eine Auswertelektronik gegeben werden, die Schaltsignale für dieEin- und Auslaßventile erzeugt. Die Schaltsignale werden nach einem Algorithmus gebildet, der vermeidet, daß die Räder blockieren.

Zu der Bremsanlage gehört weiterhin ein Pumpe 9, die aus dem Vorratsbehälter 7 ansaugt und über eine Druckleitung 12 in die Bremsleitung 2 zwischen dem Hauptbremszylinder 1 und dem Einlaßventil 4 fördert. Die Pumpe 9 hat die Aufgabe, das Druckmittel, das den Radbremsen während einer Regelung entnommen wird, zurück in den Bremskreis zu fördern. Üblicherweise wird für derartige Anlagen eine Hubkolbenpumpe vorgesehen, die über ein Saugventil 10 und ein Druckventil 11 verfügt. Das Saugventil 10 ist in der Saugleitung 13 zwischen dem Vorratsbehälter 7 und dem Eingang der Pumpe 9 angeordnet, es öffnet zur Pumpe hin. Das Druckventil 11 ist zwischen dem Ausgang der Pumpe und der Bremsleitung 2 in die Druckleitung 12 eingesetzt, es öffnet zur Bremsleitung hin. Saug- und Druckventil lassen sich am einfachsten als Rückschlagventile darstellen, die keine Vorspannung aufweisen. Der Öffnungsdruck der Ventile soll möglichst gering sein.

Der Hauptbremszylinder selbst besteht aus einem Gehäuse 20 mit einer Längsbohrung 21, in der ein Schwimmkolben 22 und ein Druckstangenkolben 23 dichtend gleiten. Schwimmkolben 22 und Druckstangenkolben 23 sind über eine Kupplungseinheit 24 miteinander verbunden, die den maximalen Abstand zwischen den beiden Kolben definiert. Zwischen den beiden Kolben ist eine Feder 25 angeordnet, die die Kolben auf maximalen Abstand hält. Eine weitere Feder 26 ist zwischen dem Boden der Bohrung und dem Schwimmkolben 22 angeordnet und drängt den Schwimmkolben 22 in seine Grundposition. Die Kolben begrenzen in der Bohrung 21 zwei Arbeitskammern 39,40. An die Arbeitskammer 39 schließt die Bremsleitung 2 an. An die Arbeitskammer 40 kann ein weiterer Bremskreis angeschlossen werden, der entsprechend dem dargestellten Bremskreis aufgebaut ist.

Der Schwimmkolben 22 ist an seinem Außenrand mit einer Ringkammer 27 versehen, die über einen Gehäusekanal 28 ständig mit dem Vorratsbehälter 7 in Verbindung steht. Die Ringnut ist sowohl gegenüber der Arbeitskammer 40 als auch gegenüber der Arbeitskammer 39 gedichtet. Gegenüber der Arbeitskammer 40 ist eine Manschettendichtung 29 vorgesehen; gegenüber der Kammer 39 eine Doppeldichtung 30, die weiter unten näher beschrieben wird. Der Druckstangenkolben 23 weist einen Bereich kleineren Durchmessers auf, der durch einen Stopfen 31 dichtend hindurchgeführt ist und an den ein Pedal angelenkt ist. Der Stopfen 31 trennt einen Nachlaufraum 32 im Gehäuse ab, der über eine Gehäusebohrung 33 mit dem Vorratsbehälter 7 in Verbindung steht. Arbeitskammer 40 und Nachlaufraum 32 werden durch eine Doppeldichtung 34 am Druckstangenkolben 23 voneinander getrennt.

Die Doppeldichtung 30 bzw 34 ist in einer Nut an der Außenseite der Kolben eingelegt und besteht aus einem innenliegenden elastischen Ring 37 (zum Beispiel einem Gummiring). Zwischen dem Gummiring 37 und der Wandung des Gehäuses 20 liegt ein Gleitring 38 vom rechteckigen Querschnitt, der aus Teflon besteht. Die Gummidichtung 37 ist leicht vorgespannt und drückt daher den Gleitring 38 gegen die Bohrung.

Gemäß der Figur 2 ist die Doppeldichtung 30,34 in einer ersten Ringnut am Kolben 22, bzw. 23 eingesetzt. Neben der Doppeldichtung ist eine Manschettendichtung in einer zweiten Nut vorgesehen. Die erste und die zweite Nut liegen nebeneinander und sind durch einen Steg voneinander getrennt. Die erste Nut liegt der jeweiligen Arbeitskammer 39, 40 am nächsten. Bei der Manschettendichtung 41 bzw. 42 handelt es sich um eine übliche Manschette, die mit ihrer Lippe an der Bohrungswand anliegt und somit eine Abdichtung erzielt.

Bezogen auf die dargestellte Grundstellung der Kolben 22 und 23 münden die Ausgleichsbohrungen 36 unmittelbar vor den Dichtungen 30,34 in die jeweiligen Kammern 39,40. Die Ausgleichsbohrungen 36 stehen mit dem Vorratsbehälter 7 in Verbindung. Sie weisen einen engen Querschnitt auf, zum Beispiel 0,8 mm. Es wäre denkbar, die Bohrung noch kleiner zu machen und mehrere Ausgleichsbohrungen auf dem Umfang der Gehäusebohrung 21 vorzusehen.

Die Anlage arbeitet nach dem folgenden Schema:
Mit Betätigen des symbolisch dargestellten Pedals wird zunächst der Druckstangenkolben 23 und unter Wirkung der Feder 25 auch der Schwimmkolben 22 verschoben.

Die Gleitringe 38 der Doppeldichtungen 30,34 schieben sich über die Ausgleichsbohrung 36 und sperren somit die Verbindungen zwischen den Arbeitsräumen 39,40 und dem Vorratsbehälter 7. Die Bremskreise sind hydraulisch gesperrt, so daß in den Bremskreisen ein Druck aufgebaut werden kann, der letztlich zu einer Fahrzeugverzögerung führt. Das Rückschlagventil 11 verhindert, daß der Bremskreisdruck in den Vorratsbehälter 7 abgebaut wird.

Beim Lösen der Bremse werden die Kolben 22 und 23 unter der Wirkung der Federn 25 und 26 gemäß der Darstellung nach rechts verschoben. Dabei kann es zu einem Unterdruck in dem System kommen, so daß Druckmittel aus dem Vorratsbehälter über die Ventile 10 und 11 der Pumpen 9 aus dem Vorratsbehälter in die Bremskreise angesaugt wird. Sobald die Kolben ihre Grundstellung erreicht haben, werden die Ausgleichsbohrungen 36 freigegeben, so daß bei nicht betätigter Bremse die Bremskreise mit dem Vorratsbehälter 7 in Verbindung stehen.

Während einer Bremsung kann der Druck je nach Betätigungskraft soweit steigen, daß die Räder zu blockieren drohen. In diesem Fall schaltet die Bremsanlage in den ABS-Modus, der beinhaltet, daß die Pumpe 9 eingeschaltet wird. Diese fördert nun aus dem Vorratsbehälter 7 über die Druckleitung 12 in den Bremskreis, wodurch Druckmittel in die Arbeitskammern 39 und 40 gelangt. Die Kolben 22, 23 werden gegen die Betätigungskraft zurück in ihre Grundstellung geschoben bis die Ausgleichsbohrungen 36 freigegeben werden. Überschüssiges Druckmittel entweicht nun über die Ausgleichsbohrung 36 in den Vorratsbehälter 7. Dabei wird der Druck in den Arbeitskammern gesenkt, so daß die Kolben unter Wirkung der Pedalkraft wieder nach links verschoben werden und die Ausgleichsbohrungen 36
schließen. Da die Pumpe 9 weiter fördert, werden die Kolben wieder zurückgestellt, wobei die Ausgleichsbohrungen freigegeben werden. Dieser Vorgang wiederholt sich in schneller Folge, so daß sich letztlich ein Regelvorgang einstellt, wobei gerade soviel Druckmittel über die Ausgleichsbohrung 36 abgelassen wird, wie die Pumpe 9 in die Arbeitskammern 37,40 des Hauptbremszylinders 1 fördert. Der eingestellt Druck entspricht der Pedalkraft. Damit eine Beschädigung der Gleitringe 38 vermieden wird, müssen diese eine bestimmte Härte aufweisen. Diese muß so gewählt sein, daß auch ein mehrmaliges Überfahren der Ausgleichsbohrung keine Beschädigungen an der Gleitringdichtung 38 hervorruft.

Die zusätzlichen Manschetten gemäß Figur 2 erfüllen nun die folgende Aufgabe. Der Gleitring der Doppeldichtung kann wegen seiner harten Oberflächenstruktur die Arbeitskammer nur unzureichend abdichten. Es wird daher stets eine geringe Leckage auftreten. Bei Beschädigungen der Gleitringdichtung oder der Bohrungswand kann es auch zu einem größeren Druckmittelfluß an der Gleitringdichtung vorbeikommen. Die Manschettendichtungen 41,42, die hinter den Doppeldichtungen angeordnet sind, bewirken nun eine vollständige Dichtung des Arbeitsraumes und verhindern, daß die Leckagemenge vollständig dem Bremskreis entnommen werden kann und in die Ringkammer 27, bzw. in den Ausgleichsraum 32 gelangt. Der Druck im Bereich zwischen den beiden Dichtungen wird, da die Leckagemenge im allgemeinen klein ist, nicht sehr groß sein, so daß die Manschettendichtung nur unter geringem Druck die Ausgleichsbohrung 36 überfährt. Eine Beschädigung der Dichtung ist daher ausgeschlossen. Die Anordnung hat weiterhin den Vorteil, daß die Oberfläche der Bohrungswand nicht extrem fein bearbeitet werden muß. Da ein gewisser Leckagestrom an der Doppeldichtung vorbei erlaubt ist.

### Bezugszeichenliste

- 1: Hauptbremszylinder
- 2: Bremsleitung
- 3: Radbremse
- 4: Einlaßventil
- 5: Auslaßventil
- 6: Rücklaufleitung
- 7: Vorratsbehälter
- 8: Rückschlagventil
- 9: Pumpe
- 10: Saugventil
- 11: Druckventil
- 12: Druckleitung
- 13: Saugleitung
- 20: Gehäuse
- 21: Bohrung
- 22: Schwimmkolben
- 23: Druckstangenkolben
- 24: Kupplungseinrichtung
- 25: Feder
- 26: Feder
- 27: Ringkammer
- 28: Gehäusekanal
- 29: Manschettendichtung
- 30: Doppeldichtung
- 31: Stopfen
- 32: Nachlaufraum
- 33: Gehäusekanal
- 34: Doppeldichtung
- 36: Ausgleichsbohrung
- 37: elastischer Ring
- 38: Gleitring
- 39: Arbeitskammer
- 40: Arbeitskammer
- 41: Manschettendichtung
- 42: Manschettendichtung

## Patentansprüche

1. Blockiergeschützte Bremsanlage mit einem Hauptbremszylinder (1), der über mindestens eine Arbeitskammer (39,40) verfügt, die von einem Arbeitskolben (22,23) begrenzt wird und, die über eine Ventileinrichtung mit einem Vorratsbehälter (7) in Verbindung steht, wobei bei nicht betätigtem Hauptbremszylinder (1) die Verbindung geöffnet und bei betätigtem Hauptbremszylinder gesperrt ist, mit einer Pumpe (9), die mit ihrer Saugseite an dem Vorratsbehälter (7) und mit ihrer Druckseite an die Arbeitskammer (39,40) anschließt, mit Radbremszylindern (3), die über eine Bremsleitung (2) mit der Arbeitskammer (39,40) in Verbindung stehen, wobei den Radbremsen (3) Ventile (4,5) zugeordnet sind, die eine schlupfabhängige Steuerung des Radbremsdruckes ermöglichen, dadurch **gekennzeichnet**, daß die Ventileinrichtung aus einem in einer Außennut des Arbeitskolbens angeordneten Dichtung (30,34) an dem Arbeitskolben besteht, wobei die Dichtung (30,34) aus einem ersten innenliegenden elastischen Ring (37) und einem zweiten außenliegenden Ring (38) aus hartem Material besteht, der an der Innenbohrung (21) des Hauptbremszylindergehäuses (20) gleitet, daß eine enge Bohrung (36) bei nicht verschobenem Arbeitskolben (22,23) unmittelbar vor der Dichtung (30,34) in die Arbeitskammer (39,40) mündet, und daß die Pumpe (9) so ausgebildet ist, daß sie zumindest in Richtung auf die Arbeitskammer (39,40) für Druckmittel durchlässig ist.

2. Bremsanlage nach Anspruch 1, dadurch **gekennzeichnet**, daß die Pumpe (9) als Hubkolbenpumpe ausgebildet ist, die über ein Saug- und Druckventil (10,11) verfügt, die als Rückschlagventile ausgebildet sind, die einen kleinen Öffnunsgdruck aufweisen.

3. Bremsanlage nach einem der vorhergehenden Ansprüche, dadurch **gekennzeichnet**, daß der innenliegende Ring (37) aus Gummi besteht und der außenliegende Ring (38) aus Teflon.

4. Bremsanlage nach Anspruch 3, dadurch **gekennzeichnet**, daß der innenliegende Ring (37) einen kreisförmigen Querschnitt und der außenliegende Ring (38) einen rechteckigen Querschnitt aufweist.

5. Bremsanlage nach Anspruch 1 oder 2, dadurch **gekennzeichnet**, daß der innen- und außenliegende Ring in einem Ring vereinigt sind, der aus einem Gummimaterial hoher Shorehärte besteht.

6. Bremsanlage nach einem der vorhergehenden Ansprüche, dadurch **gekennzeichnet**, daß in einer zweiten Nut am Arbeitskolben eine zweite Dichtung (41,42) vorgesehen ist, wobei die erste Nut, ausgehend von der Stirnseite des Kolbens die den Arbeitsraum begrenzt, als erstes angeordnet ist und die zweite Nut neben der ersten Nut liegt.

7. Bremsanlage nach Anspruch 6, dadurch **gekennzeichnet**, daß die zweite Dichtung eine Manschettendichtung (41,42) O-Ring-Dichtung oder anders geartete elastische Dichtung ist.

## Claims

1. An anti-lock-controlled brake system with a master brake cylinder (1) having at least one working chamber (39, 40) confined by a working piston (22, 23) and communicating with a storage reservoir (7) by way of a valve device, the connection being open when the master brake cylinder (1) is not actuated and closed when the master brake cylinder is actuated, with a pump (9) having its suction side connected to the storage reservoir (7) and its delivery side connected to the working chamber (39, 40), with wheel brake cylinders (3) that communicate with the working chamber (39, 40) by way of a brake line (2), valves (4, 5) being associated with the wheel brakes (3) and enabling a slip-responsive wheel brake pressure control,
**characterized** in that the valve device consists of a seal (30, 34) provided on the working piston and arranged in an external groove of the working piston, with the seal (30, 34) consisting of a first elastic ring (37) lying on the inside and of a second ring (38) of hard material which lies on the outside and which slides along the internal bore (21) of the master brake cylinder housing (20), in that, directly in front of the seal (30, 34), a narrow hole (36) leads into the working chamber (39, 40) when the working piston (22, 23) is not displaced, and in that the pump (9) is designed so as to be permeable to pressure fluid at least in the direction of the working chamber (39, 40).

2. A brake system as claimed in claim 1,
**characterized** in that the pump (9) has the design of a reciprocating piston pump having a suction valve and a delivery valve (10, 11) designed as non-return valves with a small opening pressure.

3. A brake system as claimed in either of the preceding claims,
**characterized** in that the ring (37) lying on the inside is made of rubber and in that the ring (38) lying on the outside is made of Teflon.

4. A brake system as claimed in claim 3,
**characterized** in that the ring (37) lying on the inside has a circular cross-section and in that the ring (38) lying on the outside has a rectangular cross-section.

5. A brake system as claimed in claim 1 or in claim 2,
**characterized** in that the rings lying on the inside and on the outside are united to form one ring consisting of a rubber material of high Shore hardness.

6. A brake system as claimed in any one of the preceding claims,
**characterized** in that a second seal (41, 42) is provided in a second groove on the working piston, with the first groove being arranged first, proceeding from the front face of the piston which confines the working chamber, and with the second groove being adjacent to the first groove.

7. A brake system as claimed in claim 6,
**characterized** in that the second seal is a sealing cup (41, 42), an O-ring seal or any other type of elastic seal.

## Revendications

1. Système de freinage antiblocage, comprenant un maître-cylindre de frein (1), qui est pourvu d'au moins une chambre de travail (39, 40) qui est isolée par un piston de travail (22, 23) et qui communique avec un réservoir de stockage (7) par l'intermédiaire d'un dispositif de valve, la liaison étant ouverte lorsque le maître-cylindre de frein (1) n'est pas actionné et étant bloquée lorsque le maître-cylindre de frein est actionné, une pompe (9), qui est raccordée par son côté d'aspiration au réservoir de stockage (7) et par son côté de refoulement a la chambre de travail (39, 40), des cylindres de frein de roue (3), qui communiquent avec la chambre de travail (39, 40) par l'intermédiaire d'une-conduite-de frein (2), tandis que des valves (4, 5) qui permettent une commande de la pression de frein de roue qui dépend du glissement sont associées aux freins de roue (3), caractérisé en ce que le dispositif de valve est constitué d'une garniture d'étanchéité (30, 34) disposée sur le piston de travail, dans une gorge extérieure de ce piston de travail, la garniture d'étanchéité (30, 34) étant constituée d'une première bague élastique (37) disposée intérieurement et d'une seconde bague (38) en matière dure qui est disposée extérieurment et qui glisse sur l'alésage intérieur (21) du boîtier de maître-cylindre de frein (20), en ce qu'un perçage étroit (36) débouche dans la chambre de travail (39, 40) directement en avant de la garniture d'étanchéité (30, 34) lorsque le piston de travail (22, 23) n'est pas déplacé et en ce que la pompe (9) est agencée de façon à pouvoir être traversée par l'agent de pression au moins en direction de la chambre de travail (39, 40).

2. Système de freinage selon la revendication 1, caractérisé en ce que la pompe (9) est réalisée sous forme d'une pompe à piston alternatif qui est pourvue d'une valve d'aspiration (10) et d'une valve de refoulement (11) qui sont réalisées sous forme de valves antiretour qui présentent une faible pression d'ouverture.

3. Système de freinage selon l'une des revendications précédentes, caractérisé en ce que la bague (37) disposée intérieurement est en caoutchouc et la bague (38) disposée extérieurement est en Téflon.

4. Système de freinage selon la revendication 3, caractérisé en ce que la bague (37) disposée intérieurement a une section transversale circulaire et la bague (38) disposée extérieurement a une section transversale rectangulaire.

5. Système de freinage selon la revendication 1 ou 2, caractérisé en ce que la bague disposée intérieurement et la bague disposée extérieurement sont réunies en une bague qui est en une matière du type du caoutchouc ayant une dureté Shore élevée.

6. Système de freinage selon l'une des revendications précédentes, caractérisé en ce qu'une seconde garniture d'étanchéité (41, 42) est prévue dans une seconde gorge pratiquée sur le piston de travail, la première gorge étant disposée la première à partir du côté frontal du piston qui délimite la chambre de travail et la seconde gorge étant située à côté de la première gorge.

7. Système de freinage selon la revendication 6, caractérisé en ce que la seconde garniture d'étanchéité est une coupelle d'étanchéité (41, 42), un joint torique d'étanchéité ou une garniture d'étanchéité élastique d'un autre type.
